# EUROPEAN PATENT APPLICATION

(11) **EP 4 484 481 A1**
(43) Date of publication of application: **01.01.2025**
(21) Application number: 23186953.8
(22) Date of filing: 21.07.2023
(51) Int. Cl.: C08K 3/32, C08K 3/34, C08K 3/40, C08K 7/24, C08K 7/26, C08L 27/06, C08K 5/00, D06N 3/00, B32B 27/18, B32B 5/18

(54) **LOW-EMISSION POLYMER COMPOSITIONS**

(30) Priority: 28.06.2023 PT 2023118761
(71) Applicant: TMG - Tecidos Plastificados e Outros Revestimentos para a Indústria Automóvel, S.A., 4770-583 São Cosme do Vale (PT); Universidade de Coimbra, 3004-531 Coimbra (PT)
(72) Inventor: FERREIRA ARAÚJO, ALFREDO FILIPE, 4770-583 SÃO COSME VALE (PT); ROQUE MARCENEIRO, SOFIA DANIELA, 4770-583 SÃO COSME DO VALE (PT); GONÇALVES LOBO, MARIA IRENE, 4770-583 SÃO COSME VALE (PT); ANUTES DIAS, ANA MARIA, 3004-531 COIMBRA (PT); CIPRIANO DE SOUSA, HERMINIO JOSÉ, 3004-531 COIMBRA (PT)
(74) Representative: Strehl Schübel-Hopf & Partner

(57) **Abstract**

A composition comprising a polymer, a volatile organic compound, and adsorbent particles that are (i) adsorbent particles having a pore size of more than 1 nm or (ii) adsorbent particles of a silica-alumina-containing compound having a silica/alumina ratio of lower than 30; a film made of the composition; and a composite structure containing the film.

## Description

### Field of the invention

The present invention relates to low-emission compositions and films and their use in the interior of a vehicle.

### Background art

CN 107190521 A discloses a PVC artificial leather containing zeolite as an adsorbent for plasticizers but does not disclose the pore size or the silica/alumina ratio of the zeolite. DE 10 2015 107 173 A1 discloses structures containing a polymer layer which comprises a zeolite having a pore size of 0.5 nm or lower as an adsorbent and is used to adsorb plasticizers migrating from adjacent layers. WO 2022/243084 A1 discloses a PVC dense layer composition for preparing artificial leather, wherein the PVC dense layer composition comprises a zeolite as an adsorbent having a pore size of 0.4 to 1 nm and a silica/alumina ratio of greater than 30 and up to 1000.

### Problem to be solved by the invention

The problem underlying the present invention was to provide a polymer composition and a film being improved in terms of low emissions of volatile organic compound (VOC).

### Summary of the invention

The problem underlying the present invention was solved by a composition containing specific adsorbent particles.

The present application covers the following aspects [1] to [15].
[1] A composition comprising a polymer, a VOC, and adsorbent particles that are, according to embodiment (i), adsorbent particles having a pore size of more than 1 nm or, according to embodiment (ii), adsorbent particles of a silica-alumina-containing compound having a silica/alumina ratio of lower than 30.
   [1-1] The composition according to aspect [1], wherein the adsorbent particles are capable of adsorbing the VOC.
   [1-2] The composition according to any of the preceding aspects, wherein the adsorbent particles are natural products or synthetic products.
   [1-3] The composition according to any of the preceding aspects, wherein, in embodiment (i), the pore size is 1 to 50 nm, preferably 5 to 50 nm.
   [1-4] The composition according to any of the preceding aspects, wherein, in embodiment (i), at least 90 % of the pores have a size of more than 1 nm.
   [1-5] The composition according to any of the preceding aspects, wherein, in embodiment (i), the adsorbent particles are particles of a silica-alumina-containing compound having a silica/alumina ratio of lower than 70, preferably 5 to 70.
   [1-6] The composition according to any of the preceding aspects, wherein, in embodiment (ii), the adsorbent particles have a pore size of at least 0.4 nm.
   [1-7] The composition according to any of the preceding aspects, wherein the content of the polymer is more than 40 mass%.
   [1-8] The composition according to any of the preceding aspects, wherein the VOC is at least one compound selected from hydrocarbons, alcohols, aldehydes, ketones, ethers, phenols, esters, and organic acids.
   [1-9] The composition according to any of the preceding aspects, wherein the VOC is a single compound or a mixture of compounds and is contained in an amount of more than 0.001 mass% (10 ppm) or more than 0.005 mass% (50 ppm) in the composition.
   [1-10] The composition according to any of the preceding aspects, wherein, in embodiment (i), the adsorbent particles are not particles of eggshell.
   [1-11] The composition according to aspect [1-10], wherein the adsorbent particles are particles of diatomaceous earth and/or glass.
[2] The composition according to any of aspects [1] to [1-9], wherein the adsorbent particles are particles of diatomaceous earth, glass, eggshell, or combinations thereof.
   [2-1] The composition according to aspects [2], [1-10] or [1-11], wherein the particles fall within embodiment (i).
   [2-2] The composition according to aspect [2], wherein the diatomaceous earth falls within embodiment (ii).
   [2-3] The composition according to aspect [2], wherein the glass is a recycled product.
[3] The composition according to any of the preceding aspects], wherein the adsorbent particles of the silica-alumina-containing compound have a silica/alumina ratio of lower than 30 and a pore size of more than 1 nm.
   [3-1] The composition according to aspect [3], wherein the ratio is higher than 5.
[4] The composition according to any of the preceding aspects, wherein the composition contains a plasticizer and/or a stabilizer containing the VOC.
   [4-1] The composition according to aspect [4], wherein the plasticizer is one or more compound selected from phthalate, trimellitate, adipate, sebacate, organophosphate, bio-attributed compounds, and bio-based compounds.
[5] The composition according to any of the preceding aspects, wherein at least 50 % of the pores of the adsorbent particles have a size of more than 1 nm.
   [5-1] The composition according to any of the preceding aspects, wherein at least 90 % of the pores have a size of more than 1 nm.
   [5-2] The composition according to any of the preceding aspects, wherein at least 50 %, preferably at least 90 % of the pores have a size of 1 to 50 nm.
   [5-3] The composition according to any of the preceding aspects, wherein the pores have a size of 5 to 50 nm, preferably 10 to 40 nm.
[6] The composition according to any of the preceding aspects, wherein the adsorbent particles have a BET specific surface area of at least 1 m²/g.
   [6-1] The composition according to aspect [6], wherein the BET specific surface area is attributable to the pores described in the preceding aspects.
[7] The composition according to any of the preceding aspects, wherein the size of the adsorbent particles is 1 to less than 60 µm.
   [7-1] The composition according to aspect [7], wherein the size of the adsorbent particles is 2 to 25 µm.
   [7-2] The combination of aspects [1-3], [6], and [7-1].
   [7-3] The composition according to aspect [7-2], embodiment (i), wherein the adsorbent particles are particles of a silica-alumina-containing compound and the ratio of silica to alumina is 5 to 70, preferably less than 30.
[8] The composition according to any of the preceding aspects, wherein the composition contains 0.1 to 5.0 mass% of the particles.
   [8-1] The combination of aspects [8] and [1-9], preferably [8], [1-9], and [1-7].
[9] The composition according to any of the preceding aspects, wherein the polymer is polyvinyl chloride and the composition contains a plasticizer and/or a stabilizer.
   [9-1] The composition according to aspect [9], wherein the content of the polyvinyl chloride is more than 40 mass%, and the content of the plasticizer and/or the stabilizer is more than 10 mass%.
[10] A film made of the composition according to any one of aspects [1] to [9].
   [10-1] The film according to aspect [10], wherein the film is a compact film or a foam film.
   [10-2] The film according to aspect [10] or [10-1], wherein the film has a thickness of 100 to 3000 µm.
   [10-3] The film according to any of aspects [10] to [10-2], wherein the film is capable of adsorbing an external substance, preferably a VOC.
   [10-4] The film according to any of aspects [10] to [10-3], wherein the external substance is derived from a structure being in contact with the film.
   [10-5] The use of the film according to any of aspects [10] to [10-4] for adsorbing an external substance, preferably a VOC.
[11] A composite structure comprising an adsorptive layer made of the composition of any one of aspects [1] to [9].
   [11-1] The composite structure according to aspect [11], wherein the composite structure comprises two or more of the adsorptive layers.
   [11-2] The composite structure according to aspect [11] or [11-1], wherein the composite structure contains a support layer as the lowermost layer and a lacquer layer as the uppermost layer.
   [11-3] The composite structure according to any of aspects [11] to [11-2], wherein the adsorptive layer is capable of adsorbing a substance migrated from an adjacent layer.
   [11-4] The composite structure according to any of aspects [11] to [11-3], wherein the adsorptive layer is a compact layer or a foam layer.
[12] The composite structure according to aspect [11], wherein the adsorptive layer is a compact layer or a foam layer, or the composite structure comprises two of the adsorptive layers, wherein one is a compact layer and one is a foam layer.
[13] The composite structure according to any of aspects [11] to [12], which is an artificial leather.
[14] A method of preparing a film according to aspect [10] or a composite structure according to any of aspects [11] to [13], comprising a step of applying the composition described in any of aspects [1] to [9] in a liquid or pasty form on a support and solidifying the composition to form the film or the adsorptive layer of the composite structure.
[15] The use of a film according to aspect [10] or a composite structure according to any of aspects [11] to [13] as a surface material in the interior of a vehicle.

### Advantages of the invention

The present invention provides a low-emission and low-odor composition, film, and composite structure. When used in the interior of a vehicle, the inventive products can reduce the "new-car-smell".

The adsorbent materials used in the composition and the film can be natural products. Hence, the compositions and films can be greener and more sustainable.

### Embodiments of the invention

The composition of the present invention comprises a polymer, a volatile organic compound, and adsorbent particles.

Herein, the terms "the composition", "the film", and "composite structure" refer to "the composition according to the present invention", "the film according to the present invention", and "composite structure according to the present invention", respectively, unless explicitly stated otherwise. Similarly, the terms "the VOC" and "the adsorbent particles" refer to "the VOC contained in the composition according to the present invention", and "the adsorbent particles contained in the composition of the present invention", respectively, unless explicitly stated otherwise.

The adsorbent particles are defined by two alternative embodiments:
embodiment (i): the adsorbent particles have a pore size of more than 1 nm;
embodiment (ii): the adsorbent particles are adsorbent particles of a silica-alumina containing compound having a silica/alumina ratio of lower than 30.

The adsorbent particles may meet the requirement of embodiment (i) but not embodiment (ii). Hence, adsorbent particles are covered regardless of their pores size. For instance, embodiment (i) not only covers particles of glass or eggshell, but also particles of a silica-alumina containing compound having a silica/alumina ratio of higher than 30. The adsorbent particles may meet the requirement of embodiment (ii) but not embodiment (i). Hence, adsorbent particles are covered regardless of their pores size. Alternatively, the adsorbent particles such as some natural zeolites may meet the requirements of both embodiment (i) and (ii). In the claims and in the aspects of the invention, a backreference may refer to either one or both embodiments.

Unless explicitly indicated otherwise, the description of the present invention refers to both embodiments.

The polymer containing in the composition may be any polymer such as a polyolefin, polyurethane, or polyvinyl chloride. In one embodiment, the polymer is polyvinyl chloride and the composition contains a plasticizer and/or a stabilizer.

In the present invention, the pore size, the pore size distribution, and the total pore area of the particles are measured by mercury porosimetry, the particle size distribution (PSD) of the particles is measured by Laser Diffraction spectroscopy (LDS), and the BET surface area and the pore volume of particles are determined by nitrogen adsorption.

Whenever it is mentioned in the context of this description that individual compositions or elements are "made of" a material, this should be interpreted to mean that the content of the material is more than 50 mass%, preferably more than 90 % by weight, and more preferably more than 95 % by weight.

As used herein, the singular forms "a," "an," and "the" may be intended to include the plural forms as well, unless the context clearly indicates otherwise. For instance, a volatile organic compound is meant to include more than one species of volatile organic compounds, unless indicated otherwise. The term "and/or" includes any and all combinations of one or more of the associated listed items. The terms "comprising", "containing", and "having" are inclusive and therefore specify the presence of stated features and/or components, but do not preclude the presence or addition of one or more other features, components, and/or groups thereof.

Herein, the indication of a specific value of a size such as pore size or particle size or a specific range thereof means that at least 50% of the pores or particles, respectively, have the specific value or fall within the specific range, unless explicitly indicated otherwise.

The standards and norms mentioned refer to the latest version available at the time this application was filed, unless indicated otherwise.

In the present invention, percentages (%) are percentages by mass (% by mass) unless explicitly indicated otherwise.

### Adsorbent particles

The adsorbent particles have pores that render the adsorbent particles capable of adsorbing the volatile organic component. The adsorbents used in the present invention include diatomaceous earth, clinoptilolite, eggshell, and glass. Eggshell is obtained from a renewable source and is an industry waste agro-food. In one embodiment, particles of eggshell are excluded as the adsorbent particles. The glass may be recycled glass.

The adsorbent particles of embodiment (ii) mandatorily are, and the adsorbent particles of embodiment (i) may be particles of silica-alumina-containing compounds. These compounds contain silica and alumina in their molecular structure. In other words, the molecular structure contains silicon oxides and aluminium oxides. These compounds are exemplified by zeolites and may herein jointly be referred to as "zeolites". These compounds may be defined by their silica/alumina ratio, i.e., the ratio of silicon and aluminium oxides.

Synthetic zeolites cover a very broad range of the silica/alumina ratio of up to 1000. In contrast thereto, natural silica-alumina-containing compounds have narrower ranges of the silica/alumina ratio. An example of the natural compound usable in the present invention is diatomaceous earth, which may have a particle size of 1 µm to 3 mm, typically 10 to 200 µm, and contain 80 to 90 % of silica and 2 to 4% of alumina. Another example is clinoptilolite, which may have a silica/alumina ratio of about 5.

Examples of specific adsorbent particles used herein are the following: synthetic zeolites: pore sizes of 0.4-21 nm, silica/alumina ratio of 1 to 25; diatomaceous earth: pore size of 18 nm, silica/alumina ratio of 28; clinoptilolite: pore size of 16 nm; silica/alumina ratio of 10; glass: pore size of 21 nm, silica/alumina ratio not applicable; eggshell: pore size of 31 nm, silica/alumina ratio not applicable.

### Volatile organic compounds (VOCs)

A VOC is defined as any organic compound with an initial boiling point that is less than or equal to 250°C at an atmospheric pressure of 101.3 kPa.

Examples of VOCs are carbon-containing substances including hydrocarbons, alcohols, aldehydes, ketones, ethers, phenols, esters, and organic acids but excluding carbon dioxide, carbonic acid, metallic carbides, carbonates, and ammonium carbonate. Specific examples are propane, butane, methyl chloride, formaldehyde, d-limonene, toluene, acetone, acetophenone, ethanol (ethyl alcohol) 2-propanol (isopropyl alcohol), hexanal, plasticizers (phthalates), and fire retardants (PCBs, PBB).

VOCs may be contained in the additives of the composition. Examples of additives are a plasticizer, a stabilizer, a filler, a flame retardant, a color pigment, a stabilizer, a lubricant, an ultraviolet absorber, a light stabilizer, an antioxidant, an antibacterial agent, and a foaming agent. VOCs are typically contained in a plasticizer and/or a stabilizer, which are commonly used to improve the properties of the polymer-containing composition, film, and composite structure.

### Plasticizers and stabilizers

Examples of plasticizers are phthalate-based plasticizers, which impart resistance to water and oils, such as bis(2-propylheptyl) phthalate (DPHP), diisodecyl phthalate (DIDP), diisoundecyl phthalate (DIUP), ditridecyl phthalate (DTDP), bis(2-ethylhexyl)terephthalate (DEHT, Dioctyl terephthalate, DOTP), Diisopentyl terephthalate (DiPT), dibutyl terephthalate (DBT); trimellitates, which impart resistance to high temperature and are commonly used in automobile interiors, such as (TOTM, Trioctyl Trimellitate plasticizer), tri-(isononyl)trimellitate (TINTM), tri-(isodecyl)trimellitate (TIDTM), and tri-(isotridecyl)trimellitate (TITDTM); adipate-based plasticizers, which impart low-temperature or resistance to ultraviolet light, such as bis(2-ethylhexyl)adipate (DEHA, dioctyl adipate plasticizer); sebacate-based plasticizers, which impart superior properties at low temperatures, and good oil resistivity, such as dibutyl sebacate (DBS), di-(2-ethylhexyl)sebacate, and di-octyl sebacate (or DOS plasticizer); organophosphates such as tricresyl phosphate (TCP), 2-ethylhexyldiphenyl phosphate, and tri-2-ethylhexyl phosphate; bio-based plasticizers such as glycerol triacetate (Triacetin) and acetyltributylcitrate, and plasticizers derived from natural oils. Epoxidized soybean oil may be used as a secondary plasticizer. The plasticizers may be used singly or as a combination of two or more.

Stabilizers may be added to the polymer, particularly PVC, to improve its properties such as heat ageing. Examples of stabilizers are organic epoxy stabilizers, calcium-zinc stabilizers and combinations thereof.

### Examples

### Example 1

A reference film containing PVC and a plasticizer was produced. The other films were identical to the reference film with the exception that adsorbent particles were added as shown in Table 1. The size of the adsorbent particles was in the range of 4 to 16 µm. The particles of the diatomaceous earth and the particles of the synthetic zeolite had similar specific surface area.

**Table 1**

| Film containing the following adsorbent particles | Silica/alumina ratio | Pore size of the adsorbent particles [nm] | VOC emission relative to the Reference [%] |
|---|---|---|---|
| Reference (no adsorbent) | - | - | 100 |
| Synthetic zeolite 3 % | > 30 | < 1 | 86 |
| Synthetic zeolite 5 % | | | 66 |
| Diatomaceous earth 3 % | < 30 | 18 | 75 |
| Diatomaceous earth 5 % | | | 66 |
| Recycled glass 3 % | - | 21 | 64 |
| Recycled glass 5 % | - | | 60 |

The results show an advantageous effect of the composition of embodiment (i) containing adsorbent particles of a pore size of more than 1 nm, since the same added amount of adsorbent particles of diatomaceous earth or glass resulted in a decreased VOC emission in comparison to a zeolite having a low pore size.

The results also show an advantageous effect of the composition of embodiment (ii) containing adsorbent particles having a silica/alumina ratio of lower than 30, since the same added amount of adsorbent particles of diatomaceous earth resulted in a decreased VOC emission in comparison to a zeolite having a silica/alumina ratio of more than 30.

### Example 2

The diatomaceous earth used in Example 1 was used as an adsorbent in a composite structure shown in Table 2. The foam layer and the compact layer were made of PVC containing a plasticizer.

**Table 2**

| | Comparative Example 1 | Example 1 | Example 2 |
|---|---|---|---|
| Composite structure | Compact layer (thickness 0.3 mm) | | |
| | Foam layer (thickness 0.4 mm) | | |
| | Textile layer (thickness 0.6 mm) | | |
| Adsorbent particles | none | 1 % diatomaceous earth in the compact layer | 1 % diatomaceous earth in the foam layer and the compact layer |
| Odour (2 hours at 80 °C) | not good | good | good |
| Fogging, gravimetric (DIN 75201B) | good | very good | very good |
| Fogging, reflectometer (DIN 75201A) | good | very good | very good |

The samples of the Examples and the sample of the Comparative Example did not differ from each other in terms of other physical properties such as adhesion between textile layer and coating, bending force, flexing endurance, stick-slip behaviour, and burning rate, and all samples met the requirements in respect of these physical properties for use in the interior of vehicles.

## Claims

1. A composition comprising a polymer, a volatile organic compound, and adsorbent particles that are (i) adsorbent particles having a pore size of more than 1 nm or (ii) adsorbent particles of a silica-alumina-containing compound having a silica/alumina ratio of lower than 30.

2. The composition according to claim 1, wherein the adsorbent particles are particles of diatomaceous earth, glass, eggshell, or combinations thereof.

3. The composition according to claim 1 or 2, wherein the adsorbent particles of the silica-alumina-containing compound have a silica/alumina ratio of lower than 30 and a pore size of more than 1 nm.

4. The composition according to any of the preceding claims, wherein the composition contains a plasticizer and/or a stabilizer containing the volatile organic compound.

5. The composition according to any of the preceding claims, wherein at least 50 % of the pores of the adsorbent particles have a size of more than 1 nm.

6. The composition according to any of the preceding claims, wherein the adsorbent particles have a BET specific surface area of at least 1 m²/g.

7. The composition according to any of the preceding claims, wherein the size of the adsorbent particles is 1 to less than 60 µm.

8. The composition according to any of the preceding claims, wherein the composition contains 0.1 to 5.0 mass% of the adsorbent particles.

9. The composition according to any of the preceding claims, wherein the polymer is polyvinyl chloride and the composition contains a plasticizer and/or a stabilizer.

10. A film made of the composition according to any one of claims 1 to 9.

11. A composite structure comprising an adsorptive layer made of the composition of any one of claims 1 to 9.

12. The composite structure according to claim 11, wherein the adsorptive layer is a compact layer or a foam layer, or the composite structure comprises two of the adsorptive layers, wherein one is a compact layer and one is a foam layer.

13. The composite structure according to claim 11 or 12, which is an artificial leather.

14. A method of preparing a film according to claim 10 or a composite structure according to any of claims 11 to 13, comprising a step of applying the composition described in any of claims 1 to 9 in a liquid or pasty form on a support and solidifying the composition to form the film or the adsorptive layer of the composite structure.

15. The use of a film according to claim 10 or a composite structure according to any of claims 11 to 13 as a surface material in the interior of a vehicle.
